# EUROPEAN PATENT APPLICATION

(11) **EP 4 717 962 A1**
(43) Date of publication of application: **01.04.2026**
(21) Application number: 24811070.2
(22) Date of filing: 17.05.2024
(51) Int. Cl.: F16L 11/06, B29C 48/10, C08L 27/06, C08L 67/02, B29K 27/06, B29L 23/00

(54) **FLEXIBLE TUBE**

(30) Priority: 22.05.2023 JP 2023083672
(71) Applicant: Toyox Co., Ltd., Kurobe-shi Toyama 938-8585 (JP)
(72) Inventor: NUMATA, Kenichi, Kurobe-shi, Toyama 938-8585 (JP)
(74) Representative: v. Bezold & Partner Patentanwälte - PartG mbB
(86) International application number: PCT/JP2024/018393
(87) International publication number: WO 2024/242063

(57) **Abstract**

This flexible tube is suitable for use in a roller pump or the like for fluid transport, does not decrease in flow rate even when used for a long time, and has little risk of leakage due to rupture. This flexible tube is formed by molding a resin composition composed of polyvinyl chloride having an average degree of polymerization of 1500-2500 into a tubular shape. The resin composition contains 70-100 parts by weight of a plasticizer relative to 100 parts by weight of polyvinyl chloride. The evaporation residue of a leaching solution obtained by immersing the resin composition at 25°C for 1 hour by using heptane as a solvent is 1000 µg/ml or less. The plasticizer has a weight-average molecular weight of 3500-5500. The flexible tube has a single-layer structure and can be used for the peristaltic section of a roller pump.

## Description

### Technical Field

The present disclosure relates to a flexible tube that can be suitably used for a roller pump that transports a fluid, and the like.

### Background Art

A roller pump that rotates a roller along an inner wall surface having a substantially cylindrical surface shape of a housing while crushing, between the inner wall surface and the roller, a flexible tube disposed in a circular arc shape along the inner wall surface, and thus transports a fluid in the flexible tube has been conventionally known. The roller pump is used in a heart-lung machine and a hemodialyzer in a medical field, used in an addition device of a liquid seasoning and a spice in a food field, and used for feeding, quantitative transportation, flow rate control, and the like of a fluid in a raw-material addition device and the like to a reaction furnace in a step of manufacturing an active pharmaceutical ingredient in a pharmaceutical field.

The flexible tube used in such a roller pump is required to have flexibility and mechanical strength, and further required to have durability to withstand a repeated squeezing motion by a peristaltic portion of the roller pump. As the flexible tube of such a roller pump, a tube made of rubber typified by silicone as a material of the flexible tube or a tube made of a synthetic resin typified by soft vinyl chloride has been conventionally used. Then, the flexible tube made of rubber or a synthetic resin has been manufactured by extrusion molding, and has had a circular cross-sectional shape because of easy molding and small resistance of a fluid flowing inside.

However, in a case where the circular flexible tube has been used for the roller pump, there have been problems that a gap has remained near a fold when the flexible tube has been crushed in a radial direction, a leak has easily occurred, and the flexible tube has been hardly set under vacuum. Then, considerably great welding pressure has been needed in order to eliminate the gap, and, furthermore, when the circular flexible tube has been repeatedly crushed and restored with such welding pressure, weakening of the flexible tube has occurred and the original circular cross-sectional shape has not been restored with insufficient elasticity of the flexible tube.

For example, Patent Literature 1 discloses a flexible tube including a first layer including a polyolefin material having a bending modulus of 150 MPa or less, and a second layer including a blend of a propylene polymer and a styrene block copolymer, and not including an additive such as a plasticizer eluted in a process stream.

Further, Patent Literature 2 discloses a flexible tube that has extremely little elution of a plasticizer by using an adipic acid-based polyester plasticizer having a predetermined molecular weight and is constituted from a chlorine-containing resin.

### Citation List

### Patent Literature

Patent Literature 1: Japanese Patent No. 5475794
Patent Literature 2: Japanese Patent No. 5692686

### Summary of Invention

### Technical Problem

However, in a case of Patent Literature 1 described above, there are problems in the polyolefin material used for the flexible tube that a substance other than the plasticizer is eluted from an inner surface of the flexible tube particularly when an oily fluid is caused to circulate, and a physical property is changed by elution of the substance, and a flow rate decreases due to deformation and extension particularly when the flexible tube is used for a roller pump that repeatedly crushes the flexible tube. In a case of Patent Literature 2 described above, there is no risk of a decrease in a life and the like due to a change in a physical property since elution of the plasticizer is little. However, the flexible tube is more likely to be extended when a degree of polymerization of the chlorine-containing resin is low, and a problem in terms of use such as water leakage by the extended flexible tube being sandwiched between a roller and an inner wall surface and ruptured is concerned particularly when the flexible tube is used for a roller pump that repeatedly squeezes the flexible tube.

The present disclosure has been made in view of the problems of the background art described above, and has an objective to provide a flexible tube that does not decrease in a flow rate even after long hours of use, has a small risk of water leakage due to a rupture, and can be suitably used for a roller pump that transports a fluid, and the like.

### Solution to Problem

Such an objective is achieved by the present disclosure of (1) to (8) below.
(1) A flexible tube acquired by molding, into a tubular shape, a resin composition constituted from polyvinyl chloride having an average degree of polymerization of 1,500 to 2,500, the flexible tube, wherein the resin composition contains 70 to 100 parts by weight of a plasticizer with respect to 100 parts by weight of polyvinyl chloride, and an evaporation residue of a leaching solution acquired by immersing the resin composition at 25°C for 1 hour by using heptane as a solvent is 1,000 µg/ml or less.
(2) The flexible tube according to (1), wherein the plasticizer has a weight-average molecular weight of 3,500 to 5,500.
(3) The flexible tube according to (2), wherein the plasticizer is a polyester plasticizer.
(4) The flexible tube according to (3), wherein the plasticizer is adipic acid-based polyester.
(5) The flexible tube according to (4), wherein the resin composition contains 0.5 to 1.2 parts by weight of a lubricant constituted from acrylic and/or methacrylic resin having a weight-average molecular weight of about 10,000 to 400,000.
(6) The flexible tube according to (5), wherein the resin composition has IRHD hardness of 45 to 75 measured in conformity with ISO48.
(7) The flexible tube according to any of (1) to (6), wherein the flexible tube has a single-layer structure.
(8) The flexible tube according to (7), wherein the flexible tube is usable for a peristaltic portion of a roller pump.

### Advantageous Effects of Invention

According to the present disclosure, a flexible tube that has no change in a physical property of the flexible tube since an eluate is little, does not decrease in a flow rate even after long hours of use, has a small risk of water leakage due to a rupture and the like, and can be suitably used for a roller pump that transports a fluid, and the like can be acquired. Furthermore, since an eluate is little, the flexible tube according to the present disclosure can be safely used in medical, food, and pharmaceutical fields, and the like.

### Description of Embodiments

Suitable embodiments of a flexible tube according to the present disclosure are described below in detail.

Herein, a roller pump is referred to as a tube pump, a tubing pump, a hose pump, a peristaltic pump, a peristaltic-type pump, and the like, and is constituted from a flexible tube and a peristaltic portion provided with protrusions. The roller pump is a pump that pushes the flexible tube with the protrusions by rotation of the peristaltic portion, and transports a fluid by pushing out the fluid in the flexible tube.

### <Polyvinyl Chloride>

A resin composition constituting the flexible tube according to the present disclosure is constituted from polyvinyl chloride.

An average degree of polymerization of polyvinyl chloride is preferably 1,500 to 2,500 and more preferably 1,700 to 2,300. When the average degree of polymerization is lower than 1,500, tensile strength decreases, which makes it easier to extend, and thus slackness of the flexible tube occurs due to extension of the flexible tube particularly when being used for the roller pump. A slack portion of the flexible tube sandwiched between a roller and an inner wall surface receives an unexpected shearing force by a movement of the roller and is ruptured, and water leakage occurs, and thus the flexible tube cannot be suitably used for the roller pump. On the other hand, when the average degree of polymerization is higher than 2,500, entanglement of molecular chains increases, and thus resistance to deformation increases, and, particularly when being used for the roller pump, motions of repeatedly crushing and restoring the flexible tube are not stable and a flow rate changes over time. Thus, the flexible tube cannot be suitably used for the roller pump that requires quantitative transportation and flow rate control. Therefore, by setting an average degree of polymerization of polyvinyl chloride within the range described above, the flexible tube that has a stable flow rate without occurrence of water leakage due to a rupture and the like and is suitable for the roller pump can be acquired.

### <Plasticizer>

The resin composition constituting the flexible tube according to the present disclosure contains at least one plasticizer.

A content of the plasticizer is preferably 70 to 100 parts by weight and more preferably 80 to 90 parts by weight with respect to 100 parts by weight of polyvinyl chloride. When an addition amount of the plasticizer is smaller than 70 parts by weight, the resin composition hardens, and, particularly when being used for the roller pump, motions of repeatedly crushing and restoring the flexible tube are not stable and a flow rate changes over time. Thus, the flexible tube cannot be suitably used for the roller pump that requires quantitative transportation and flow rate control. On the other hand, when an addition amount of the plasticizer is greater than 100 parts by weight, the resin composition softens, and slackness of the flexible tube occurs due to extension of the flexible tube particularly when being used for the roller pump. Furthermore, a portion of the flexible tube sandwiched between the roller and the inner wall surface receives an unexpected shearing force by a movement of the roller and is ruptured, and water leakage occurs. Thus, the flexible tube that does not satisfy the conditions described above cannot be used for the roller pump. In contrast, by setting an addition amount of the plasticizer within the range described above, the flexible tube that has a stable flow rate without occurrence of water leakage due to a rupture and is suitable for the roller pump can be acquired. Particularly, by setting a content of the plasticizer to be 80 to 90 parts by weight with respect to 100 parts by weight of polyvinyl chloride, the flexible tube that has high flexibility and restorability, also has high durability, and is suitable for the roller pump can be acquired.

A weight-average molecular weight of the plasticizer is preferably 3,500 to 5,500 and more preferably 4,000 to 5,000. When a molecular weight of the plasticizer is smaller than 3,500, there are problems that a substance other than the plasticizer is eluted from an inner surface of the flexible tube when an oily fluid is caused to circulate, and a physical property is changed by elution of the physical property, and a flow rate decreases due to deformation and extension particularly when being used for the roller pump that repeatedly crushes the flexible tube. On the other hand, when a molecular weight of the plasticizer is greater than 5,500, the plasticizer is hardly held in a molecular chain of polyvinyl chloride as a result that the molecular weight of the plasticizer is great with respect to a free volume of the molecular chain, and the plasticizer is deposited on a surface of the flexible tube due to an external force and a temperature change and contaminates a fluid.

Examples of the plasticizer include a polyester plasticizer such as phthalate polyester, adipic acid polyester, trimellitic acid polyester, and acetyl citrate polyester, and examples of the plasticizer include a polyester plasticizer preferably having a weight-average molecular weight of 3,500 to 5,500, a polyester plasticizer more preferably having a weight-average molecular weight of 4,000 to 5,000, and the like. As the polyester plasticizer, adipic acid polyester is particularly preferable. By using adipic acid polyester as the plasticizer for the resin composition having the configuration described above, the flexible tube that has extremely little elution of the plasticizer, has high flexibility and restorability, also has high durability, and is constituted from a chlorine-containing resin suitable for the roller pump can be provided.

### <Additive>

As necessary, the resin composition may be combined with various additives (such as a heat stabilizer, a light stabilizer, an ultraviolet absorber, an antioxidant, an anti-fogging agent, and an antistatic agent) in addition to the components described above.

The resin composition may contain a lubricant in order to improve moldability, and examples of the lubricant include an acrylic lubricant, for example, a copolymer in which alkyl acrylate and/or alkyl methacrylate is an essential component, that is, acrylic and/or methacrylic resin, and the like. Particularly, from a viewpoint of visibility of an internal fluid, transparent or semitransparent acrylic and/or methacrylic resin is preferably used.

Particularly, in order to improve moldability, a lubricant constituted from acrylic and/or methacrylic resin having a weight-average molecular weight of 400,000 or less is preferably used as the lubricant described above. The lubricant is more preferably a lubricant constituted from acrylic and/or methacrylic resin having a weight-average molecular weight of 10,000 to 400,000, and further preferably a lubricant constituted from acrylic and/or methacrylic resin having a weight-average molecular weight of 100,000 to 300,000.

In order to reduce a contact frictional force with a die inside an extruder and improve moldability, 0.5 to 1.2 parts by weight of a lubricant constituted from acrylic and/or methacrylic resin having a weight-average molecular weight of 100,000 to 300,000 is preferably contained as the lubricant described above. Furthermore, about 0.8 parts by weight of a lubricant constituted from acrylic and/or methacrylic resin having a weight-average molecular weight of about 200,000 to 230,000 is more preferably contained.

### <Resin Composition>

For the resin composition constituting the flexible tube according to the present disclosure, an evaporation residue of a leaching solution acquired by immersing the resin composition at 25°C for 1 hour by using heptane as a solvent is preferably 1,000 µg/ml or less and more preferably 200 µg/ml or less. When the evaporation residue is greater than 1,000 µg/ml, a physical property of the resin composition is changed by elution of a substance, and, particularly when being used for the roller pump, a flow rate decreases due to deformation and extension by being repeatedly crushed. Thus, the flexible tube cannot be suitably used for the roller pump that requires quantitative transportation and flow rate control.

Since the resin composition described above provides appropriate flexibility to the flexible tube, the constitutional components described above are preferably adjusted in such a way that IRHD hardness measured in conformity with ISO48 is 45 to 75, and the constitutional components described above are more preferably adjusted in such a way that IRHD hardness is 55 to 65.

Since the resin composition described above provides appropriate flexibility to the flexible tube, extension measured in conformity with JIS K 6723 is preferably 380% to 460% and more preferably 410% to 430%.

Furthermore, since the resin composition described above provides appropriate flexibility to the flexible tube, tensile strength measured in conformity with JIS K 6723 is preferably 10 to 25 MPa and more preferably 15 to 20 MPa.

The flexible tube according to the embodiment has a degree of polymerization of polyvinyl chloride and an addition amount of the plasticizer being set in a predetermined range, does not decrease in a flow rate even after long hours of use and has a small risk of water leakage due to a rupture and the like in a use in which repeated elastic deformation and plastic deformation are caused, and can be suitably used for the roller pump that transports a fluid, and the like. Further, the flexible tube according to the embodiment of the present disclosure has a single-layer structure being extruded and molded by an extruder. Therefore, peeling between layers as in a multilayer structure does not occur. Therefore, the flexible tube can withstand, for long hours, a use in which a repeated crushing force is applied, such as a roller pump and a pinch valve, and stable quantitative transportation of a fluid and the like can be performed.

Furthermore, since elution of a substance from the resin composition is little, the flexible tube can be suitable used as a tube for food, cosmetics, perfume, medical and pharmaceutical products, medical treatment, pure water, ink, and the like in medical, food, and pharmaceutical fields, and the like.

### Example

The present disclosure is more specifically described below with Examples, but the technical scope of the present disclosure is not limited to Examples. Examples 1 to 13 and Comparative Examples 1 to 5 are described below.

In Example 1, a flexible tube having an inside diameter of 4.8 mm and a wall thickness of 1.6 mm was acquired by mixing 70 parts by weight of adipic acid polyester having a weight-average molecular weight of 4,000 to 5,000 as a plasticizer and 0.8 parts by weight of an acrylic lubricant (METABLEN (registered trademark) L-1000 made by Mitsubishi Chemical Corporation) having a weight-average molecular weight of 200,000 to 230,000 as a lubricant into 100 parts by weight of polyvinyl chloride having a degree of polymerization of 1,500 as illustrated in Table 1, and being extruded by an extruder.

In Examples 2 to 13 and Comparative Examples 1 to 4, a flexible tube having an inside diameter of 4.8 mm and a wall thickness of 1.6 mm was acquired by appropriately operating a degree of polymerization of polyvinyl chloride, an addition amount of a plasticizer, and a molecular weight of the plasticizer in such a way that values illustrated in Table 1 are taken, and by a technique similar to that in Example 1.

In Comparative Example 5, a flexible tube having an inside diameter of 4.8 mm and a wall thickness of 1.6 mm was acquired by extruding a polyolefin material (Engage (registered trademark) 8200 made by The Dow Chemical Company) by an extruder.

Further, an evaporation residue, flow rate stability, and durability that were measurement items were measured by the following methods.

### <Evaporation Residue>

The evaporation residue was measured by using heptane as a leaching solution. Five test samples were cut from each of Examples 1 to 13 and Comparative Examples 1 to 5 in such a way that a surface area of a fluid contact portion when heptane was encapsulated was 400 cm², heptane at 25°C was encapsulated in the test samples, both ends of the test samples were then closed with a hose clip to be sealed, and the test samples were left at rest in a thermostat bath at 25°C for 1 hour. When the evaporation residue from an evaporation residue amount in an extracted amount of a test solution was 200 µg/ml or less, ⊚. When the evaporation residue was greater than 200 µg/ml and 600 µg/ml or less, ∘. When the evaporation residue was greater than 600 µg/ml and 1,000 µg/ml or less, △. When the evaporation residue was greater than 1,000 µg/ml, ×.

### <Flow Rate Stability>

The flow rate stability was measured by a time since an operation start time until a flow rate decreased to 90% of an initial flow rate by using Examples 1 to 13 and Comparative Examples 1 to 5 for a roller pump and setting a flow rate after 24 hours from the operation start as the initial flow rate. The roller pump was acquired by using a roller pump head 313X made by Watson-Marlow Inc. for a 313/WI type pump made by ISOWATEC Corporation, and causing n-heptane at 23°C±3°C to circulate as a test fluid at roller revolutions per minute of 150 rpm of the pump head. The flow rate stability was measured by a time since an operation start time until a flow rate decreased to 90% of the initial flow rate. When the time was 1,000 hours or longer, ⊚. When the time was 600 hours or longer and shorter than 1,000 hours, ∘. When the time was 200 hours or longer and shorter than 600 hours, △. When the time was shorter than 200 hours, ×.

### <Durability>

The durability was measured by a time until water leakage occurred when Examples and Comparative Examples were used for the same roller pump as that of the test for checking the flow rate stability described above. When the time until water leakage occurred was longer than 1,000 hours in which water leakage did not occur, ⊚. When the time was 600 hours or longer and shorter than 1,000 hours, ∘. When the time was 200 hours or longer and shorter than 600 hours, △. When the time was shorter than 200 hours, ×.

**[Table 1]**

| | | EXAMPLE | | | | | | | | | | | | | COMPARATIVE EXAMPLE | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 | 3 | 4 | 5 |
| THERMOPLASTIC RESIN MATERIAL | | PVC | PVC | PVC | PVC | PVC | PVC | PVC | PVC | PVC | PVC | PVC | PVC | PVC | PVC | PVC | PVC | PVC | POLYOL EFIN |
| | POLYMERIZATION DEGREE OF POLYMERIZATION | 1500 | 1500 | 1500 | 2000 | 2000 | 2000 | 2000 | 2000 | 2000 | 2000 | 2500 | 2500 | 2500 | 1300 | 2700 | 2000 | 2000 | - |
| PLASTICI ZER | ADDITION AMOUNT (PARTS BY WEIGHT) | 70 | 85 | 100 | 70 | 70 | 70 | 85 | 100 | 100 | 100 | 70 | 85 | 100 | 85 | 85 | 65 | 105 | - |
| PLASTICI ZER | MOLECULAR WEIGHT | 4500 | 4500 | 4500 | 3200 | 3500 | 4500 | 4500 | 4500 | 5500 | 5700 | 4500 | 4500 | 4500 | 4500 | 4500 | 4500 | 4500 | 4500 |
| | EVAPORATION RESIDUE | ○ | ○ | △ | ⊚ | ⊚ | ⊚ | ⊚ | ○ | ○ | ○ | ⊚ | ⊚ | ○ | ⊚ | ⊚ | ⊚ | × | × |
| | FLOW RATE STABILITY | △ | △ | △ | ○ | ⊚ | ⊚ | ⊚ | ⊚ | ⊚ | ○ | △ ⊚ | △ ⊚ | △ | × | × | × | × | × |
| | DURABILITY | △ | △ | △ | ⊚ | ⊚ | ⊚ | ⊚ | ⊚ | ⊚ | ⊚ | | | ⊚ | × | ⊚ | ⊚ | × | ○ |

In Examples 1 to 13, the degree of polymerization of polyvinyl chloride fell within 1,500 to 2,500, the addition amount of the plasticizer was 70 to 100 parts by weight, and the amount of the evaporation residue was 1,000 µg/ml or less, and thus the flow rate was stable for long hours with <Flow Rate Stability> of △ (200 hours or longer and shorter than 600 hours) or higher, and the durability was excellent without water leakage due to a rupture and the like for long hours with <Durability> of △ (200 hours or longer and shorter than 600 hours) or higher. Among Examples, in Examples 4 to 10, the flow rate stability and the durability were more excellent with both of <Flow Rate Stability> and <Durability> of ∘ (600 hours or longer and shorter than 1,000 hours) or higher, and, particularly, in Examples 5 to 9, the flow rate stability and the durability were further excellent with both of <Flow Rate Stability> and <Durability> of ⊚ (1,000 hours or longer).

In Comparative Examples 1 to 5, any of <Flow Rate Stability> and <Durability> was × (shorter than 200 hours), and an evaluation result was poor.

In Comparative Example 1, since the degree of polymerization of polyvinyl chloride was lower than 1,500, the flexible tube was extended and slackened in the roller head, a slack portion of the flexible tube sandwiched between the roller and the inner wall surface was sheared by a movement of the roller, and water leakage occurred after shorter than 200 hours from the operation start.

In Comparative Example 2, since the degree of polymerization of polyvinyl chloride was higher than 2,500, the flexible tube was hard, water leakage did not occur, and the durability was excellent with <Durability> of ⊚ (1,000 hours or longer). Meanwhile, a restoration amount when the flexible tube was repeatedly crushed by the roller was small, and the flow rate was 90% or less for shorter than 200 hours.

In Comparative Example 3, since the addition amount of the plasticizer was smaller than 70 parts by weight, the flexible tube was hard, water leakage did not occur, and the durability was excellent with <Durability> of ⊚ (1,000 hours or longer). Meanwhile, a restoration amount when the flexible tube was repeatedly crushed by the roller was small, and the flow rate was 90% or less after shorter than 200 hours.

In Comparative Example 4, since the addition amount of the plasticizer was greater than 100 parts by weight, the flexible tube was extended and slackened in the roller head, a slack portion of the flexible tube sandwiched between the roller and the inner wall surface was sheared by a movement of the roller, and water leakage occurred after shorter than 200 hours from the operation start.

In Comparative Example 5, the amount of the evaporation residue derived from a rubber component from the polyolefin material was × (greater than 1,000 µg/ml), and a restoring force decreased due to a loss of a soft segment, and thus the flow rate was 90% or less after shorter than 200 hours.

Therefore, Comparative Examples 1 to 5 cannot be suitably used for the roller pump that requires the flow rate stability needed for quantitative transportation and flow rate control, and the durability enabling an operation for long hours.

From this result, in a flexible tube acquired by molding, into a tubular shape, a resin composition constituted from polyvinyl chloride having an average degree of polymerization of 1,500 to 2,500, the resin composition contains 70 to 100 parts by weight of a plasticizer with respect to 100 parts by weight of polyvinyl chloride, and an evaporation residue of a leaching solution acquired by immersing the resin composition at 25°C for 1 hour by using heptane as a solvent is 1,000 µg/ml or less. The flexible tube does not decrease in a flow rate even after long hours of use, has a small risk of water leakage due to a rupture and the like, and can be suitably used for a roller pump that transports a fluid, and the like. Furthermore, since elution of a substance from the resin composition is little, the flexible tube can be suitable used as a tube for food, cosmetics, perfume, medical and pharmaceutical products, medical treatment, pure water, ink, and the like in medical, food, and pharmaceutical fields, and the like.

## Claims

1. A flexible tube acquired by molding, into a tubular shape, a resin composition constituted from polyvinyl chloride having an average degree of polymerization of 1,500 to 2,500, the flexible tube, wherein
the resin composition contains 70 to 100 parts by weight of a plasticizer with respect to 100 parts by weight of polyvinyl chloride, and an evaporation residue of a leaching solution acquired by immersing the resin composition at 25°C for 1 hour by using heptane as a solvent is 1,000 µg/ml or less.

2. The flexible tube according to claim 1, wherein the plasticizer has a weight-average molecular weight of 3,500 to 5,500.

3. The flexible tube according to claim 2, wherein the plasticizer is a polyester plasticizer.

4. The flexible tube according to claim 3, wherein the plasticizer is adipic acid-based polyester.

5. The flexible tube according to claim 4, wherein the resin composition contains 0.5 to 1.2 parts by weight of a lubricant constituted from acrylic and/or methacrylic resin having a weight-average molecular weight of about 10,000 to 400,000.

6. The flexible tube according to claim 5, wherein the resin composition has IRHD hardness of 45 to 75 measured in conformity with ISO48.

7. The flexible tube according to any of claims 1 to 6, wherein the flexible tube has a single-layer structure.

8. The flexible tube according to claim 7, wherein the flexible tube is usable for a peristaltic portion of a roller pump.
